Europäisches Patentamt

European Patent Office

Office européen des brevets

(19)

(11) Numéro de publication: **0 187 586**
**B1**

(12)

# FASCICULE DE BREVET EUROPÉEN

(45) Date de publication du fascicule du brevet:
25.10.89

(21) Numéro de dépôt: 85402461.9

(22) Date de dépôt: 10.12.85

(51) Int. Cl.⁴: **B 01 D  57/02,** G 01 N  27/26,
C 07 K  3/14, C 12 N  9/00,
C 07 H  21/00

(54) Perfectionnements aux procédés et appareils d'électrophorèse préparative.

(30) Priorité: 11.12.84  FR 8418910

(43) Date de publication de la demande:
16.07.86 Bulletin 86/29

(45) Mention de la délivrance du brevet:
25.10.89 Bulletin 89/43

(84) Etats contractants désignés:
AT BE CH DE GB IT LI LU NL SE

(56) Documents cité:
FR-A-2 352 299
US-A-3 375 187
US-A-3 697 406

ANALYTICAL BIOCHEMISTRY, vol. 51, no. 2,
février 1973, pages 456-465, Academic Press Inc.,
New York, US; K. SHIMADA et al.: "A new device
of preparative polyacrylamide gel electrophoresis
and its application to analysis of cellular RNA"
ANALYTICAL BIOCHEMISTRY, vol. 11, 1965, pages
342-361, New York, US; P.H. DUESBERG et al.:
"Preparative zone electrophoresis of proteins on
polyacrylamide gels in 8 M urea1"

(73) Titulaire: INSTITUT NATIONAL DE LA SANTE ET
DE LA RECHERCHE MEDICALE (INSERM), 101,
rue de Tolbiac, F-75654 Paris Cédex 13 (FR)

(72) Inventeur: Huynh, Van Tan, 8, rue du Billoir,
F-91170 Viry Chatillon (FR)

(74) Mandataire: Peaucelle, Chantal, S.C. Ernest
Gutmann - Yves Plasseraud 67, boulevard
Haussmann, F-75008 Paris (FR)

## Description

L'invention a pour objet des perfectionnements aux procédés et appareils d'électrophorèse préparative.

On sait que l'électrophorèse en gel constitue une technique de séparation performante basée sur les différences de mobilité de composés donnés sous l'influence d'un champ électrique. Cette technique est largement utilisée pour purifier des composés notamment des macromolécules telles que les protéines et les acides nucléiques.

Son utilisation à l'échelle préparative est cependant difficile en raison du problème de l'élution des composés pris dans le gel, et ce plus particulièrement lorsqu'il s'agit de macromolécule.

Diverses solutions ont été proposées pour récupérer les composés séparés.

Il s'agit, par exemple, de couper le gel en tranches et de laisser gonfler les tranches dans un tampon permettant ainsi une diffusion des macromolécules dans le tampon extérieur au gel. Cette technique présente cependant plusieurs inconvénients liés, notamment à la lenteur de la diffusion, à la dilution de l'échantillon et au faible rendement.

Selon une autre solution, on utilise un réactif labile (la bis-acrylylcystamine par exemple) pour polymériser le gel. Après électrophorèse, le gel est découpé et solubilisé par un deuxième réactif (le 2-mercaptoethanol dans l'exemple cité) pour libérer les produits. Mais il s'avère souvent nécessaire de dialyser les produits de solubilisation ce qui entraîne fréquemment une adsorption des produits sur la membrane de dialyse. En outre, le réactif de solubilisation n'est pas toujours neutre vis-à-vis de certains des produits séparés et peut donc les altérer.

On a également proposé de soumettre le gel ou les tranches du gel à une opération d'électro-élution transversale sur de l'hydroxyapatite puis d'éluer les produits séparés en changeant le tampon.

Dans les solutions ci-dessus, l'échantillon se trouve cependant dilué et on observe d'une manière générale une perte de résolution.

Une autre méthode consiste à continuer l'électrophorèse jusqu'à ce que les produits émergent en bout du gel. La surface du gel correspondant à cette zone de fin de migration délimite avec une membrane ou un corps poreux une chambre d'élution que traverse un courant de tampon emportant les produits ayant émergé vers un collecteur de fractions.

Ces chambres d'élution souffrent d'un inconvénient majeur, à savoir, la dilution des produits élués. En effet, si le débit du tampon d'élution est faible, les produits migrent vers l'électrode, hors de la chambre d'élution et sont perdus; si le débit du tampon d'élution est suffisant pour éliminer cette perte, l'échantillon est dilué. La concentration subséquente nécessaire de l'échantillon amène une perte par adsorption sur la membrane de concentration.

Pour limiter la dilution de l'échantillon, on utilisera dans d'autres appareils une membrane semi-perméable pour délimiter la chambre d'élution. Dans ce cas, les produits au lieu d'être perdus vers l'électrode, sont collés sur la membrane par le courant électrique. D'où la nécessité d'un automatisme qui doit être capable de commander le cycle suivant:

a) au bout d'un temps donné (choisi par l'expérimentateur) le programme arrête l'électrophorèse.

b) dans un deuxième temps (choisi par l'expérimentateur également) le programme renverse la polarité de l'électrophorèse pour détacher les produits collés sur la membrane,

c) le programme arrête de nouveau l'électrophorèse et met en marche une pompe pour vider la chambre d'élution vers un collecteur de fractions,

d) le programme arrête la pompe et ouvre une électro-vanne pour remplir la chambre d'élution et recommencer le cycle.

Ce type d'appareil, compte-tenu de la partie électronique, présente le désavantage d'un coût élevé.

L'invention a pour but de fournir un procédé d'électrophorèse et un appareil pour la mise en oeuvre de ce procédé plus satisfaisants au regard des exigences de la technique.

Elle vise, en particulier, à fournir un procédé performant permettant l'élution et la récupération des produits recherchés avec des rendements au moins aussi élevés que ceux de l'art antérieur.

Elle vise, en outre, à fournir un appareil de construction simple et de prix de revient moindre que ceux connus à ce jour.

L'invention concerne un procédé de purification de produits d'un échantillon donné par électrophorèse sur gel avec élution de ces produits à l'aide d'un premier système tampon et comprenant

- le passage d'un deuxième tampon, dans le sens opposé à celui de la migration des produits à séparer, vers une chambre d'élution définie entre la surface du gel correspondant à la zone de fin de migration des produits et un élément semi-perméable, maintenu de manière étanche parallèlement à la dite surface du gel, l'élément semi-perméable ne se laissant pas traverser par les molécules éluées mais les déviant vers une ou des sorties,

- l'évacuation de la chambre d'élution, par le deuxième tampon, des produits ayant subi l'électrophorèse, et

- la récupération de ces produits, un tel procédé, connu en soi du document

ANALYTICAL BIOCHEMISTRY, vol. 51, no. 2, février 1973, pages 456 - 465, Academic Press Inc., New York, US; K. SHIMADA et al.: "A new device of preparative polyacrylamide gel electrophoresis and its application to analysis of cellular RNA''

se caractérise selon l'invention en ce que
- le passage du deuxième tampon est engendré par la migration du tampon sous l'effet du courant d'électrophorèse ou électroendosmose, sans qu'aucune pompe ne soit actionnée, et
- le volume de la chambre d'élution est virtuel, c'est-à-dire la distance de l'élément semi-perméable de la surface du gel est pratiquement nulle.

Le passage de tampon à travers l'élément semi-perméable permet de le laver continuellement et d'éliminer, tout au moins en grande partie, la perte par adsorption sur l'élément semi-perméable des produits à récupérer.

Le volume virtuel de la chambre d'élution permet de n'utiliser qu'un faible courant de tampon et présente l'avantage de recueillir les produits purifiés dans de petits volumes d'élution.

Or, le volume des chambres d'élution dans les appareils connus à ce jour est supérieur au millimètre.

De plus, l'utilisation du courant osmotique rend inutile la mise en oeuvre d'une pompe, facteur de perte du pouvoir séparateur de l'appareil.

Selon le processus le plus généralement utilisé, l'échantillon à purifier est déposé au sommet d'une colonne de gel dont la partie supérieure est immergée dans un tampon contenu dans un récipient pourvu d'une électrode, ou tampon d'électrode supérieur, et dont la partie inférieure avec la chambre d'élution délimitée par un élément semi-perméable est en contact avec un tampon contenu dans un récipient pourvu d'une autre électrode, ou tampon d'électrode inférieur.

Conformément au procédé de l'invention, l'élément semi-perméable est traversé dans le sens opposé à celui de la migration des produits par le tampon d'électrode inférieur.

Les tampons d'électrode inférieurs et supérieurs peuvent être identiques ou différents. De même le gel peut se trouver dans un tampon identique ou différent des tampons d'électrode.

Conformément aux techniques classiques, le gel peut comporter plusieurs types de tampons définissant des zones différentes dans le gel, ce qui favorise la séparation des produits.

Le choix plus spécialement de l'élément semi-perméable (en particulier de sa nature et de sa porosité), du système tampon (en particulier de la nature du ou des tampons, de leur différence de conductivité), de l'intensité du courant électrique, de la nature du gel est effectué en fonction des produits à purifier et du débit que l'on souhaite imposer pour la récupération de l'éluat et sera aisément déterminé par l'homme de l'art.

Le débit peut être notamment de 0.05 à 10 ml/h.

A titre d'exemple, l'élément semi-perméable peut être constitué par une couche de matière plastique poreuse telle que l'acétate de cellulose, du polychlorure de vinyle ou analogue, éventuellement sur un support, notamment sur du carton. Il peut s'agir également d'une membrane en peau animale ou encore d'une membrane dite milli-pore.

La dimension des pores peut varier largement étant entendu que les pores doivent être approximativement du même ordre de grandeur que les produits ayant migré et doivent permettre la création du phénomène d'électroendosmose avec le tampon comme indiqué ci-dessus. Ainsi les membranes dites "millipores pour dialyse" possèdent des diamètres moyens de l'ordre de 200 à 300 Å.

Dans d'autres membranes ou couches semi-perméables des diamètres peuvent être seulement de l'ordre de 10 à 20 Å ou même inférieur.

Le gel est formé à partir d'un polymère électriquement chargé. Parmi les polymères utilisés en électrophorèse, on citera le polyacrylamide l'agarose, l'amidon, l'agar ou la gélose.

L'augmentation de la charge électrique du polymère accentuera le phénomène d'osmose.

La configuration du gel peut être variée. La forme cylindrique apparaît la plus simple, mais des formes, par exemple, en tambour ou en plaque peuvent être utilisées.

Le tampon peut être choisi également dans une large gamme de systèmes appropriés comprenant les tampons citrate, phosphate, borate ou de type tris, c'est-à-dire tris-(hydroxyméthyl) aminométhane.

L'invention vise également un appareil pour la mise en oeuvre du procédé d'électrophorèse preparative mentionné ci-dessus.

Cet appareil est caractérisé en ce qu'il comporte:
- un élément semi-perméable de forme adaptée au gel permettant de mettre à profit le phénomène, d'électroendosmose qui se crée pendant l'électrophorèse, sans qu'aucune pompe soit actionnée,
- des moyens de sortie permettant d'évacuer sans l'aide de pompe vers l'extérieur les produits qui émergent du gel à l'aide du courant de tampon dans le sens opposé à celui de la migration des produits engendré par l'élément électroendosmotique.

L'élément semi-perméable répond avantageusement aux dispositions définies ci-dessus.

Le ou les conduits de sortie doivent être disposés de manière à évacuer simultanément et en un minimum de temps toutes les molécules d'un type de produit donné qui émergent du gel.

Ces moyens d'évacuation de l'éluat qui sont plus spécialement constitués par des moyens du type tube, dépend notamment de la dimension du gel. Pour les gels de petit diamètre, ces moyens d'évacuation peuvent être cependant disposés sur le côté du gel, et pour les gels de grande dimension au milieu de la surface du gel. Ces dispositions permettent d'augmenter le pouvoir séparateur de l'appareil, en évitant le remélange des produits qui a lieu lorsque l'évacuation des molécules d'un même type de produit ne sont pas évacuées simultanément.

Selon une autre disposition, l'appareil d'électrophorèse de l'invention comprend un circuit de réfrigération.

Dans le cas, par exemple, des appareils comprenant comme indiqué ci-dessus un récipient renfermant le tampon inférieur d'électrode, ce récipient est surélevé jusqu'à la base du récipient du tampon supérieur d'électrode et un serpentin disposé à l'intérieur du récipient inférieur ou inclus dans la masse du récipient amène le liquide réfrigérant qui refroidit, par l'intermédiaire du tampon inférieur, la colonne d'électrophorèse. L'utilisation de moyens d'agitation, par exemple, d'un barreau aimanté permet d'améliorer l'échange calorifique.

Selon un autre mode de réalisation, l'invention vise également un appareil pour la mise en oeuvre d'un procédé d'électrophorèse préparative avec élution des produits à purifier d'un échantillon donné à l'aide d'un premier système tampon et comprenant:

- le passage d'un deuxième tampon, sans qu'aucune pompe ne soit actionnée, dans le sens opposé à celui de la migration des produits à séparer, vers une chambre d'élution définie entre la surface du gel correspondant à la zone de fin de migration des produits et un élément semi-perméable, maintenu de manière étanche parallèlement à la dite surface du gel, l'élément semi-perméable ne se laissant pas traverser par les molécules éluées mais les déviant vers une ou des sorties,

- l'évacuation de la chambre d'élution, par le deuxième tampon, des produits ayant subi l'électrophorèse, et

- la récupération de ces produits, caractérisé en ce qu'il comprend:

- une enceinte formée d'un tube cylindrique renfermant un gel sur lequel est déposé un échantillon contenant le produit à récupérer,

- la partie supérieure du tube étant immergée dans un tampon supérieur d'électrode contenu dans le bas,

- un élément électroendosmotique maintenu à l'extrémité du tube contre le gel par un collier à vis formant une chambre d'élution de volume virtuel

- un bac inférieur contenant un tampon inférieur d'électrode, dans lequel plonge la partie inférieure du tube,

- des électrodes fixées sur les parois internes du bac du bac,

- un tube dont une extrémité est en communication avec la chambre d'élution virtuelle de l'élément électroendosmotique et l'autre extrémité débouchant à l'extérieur du bac vers un collecteur de fraction.

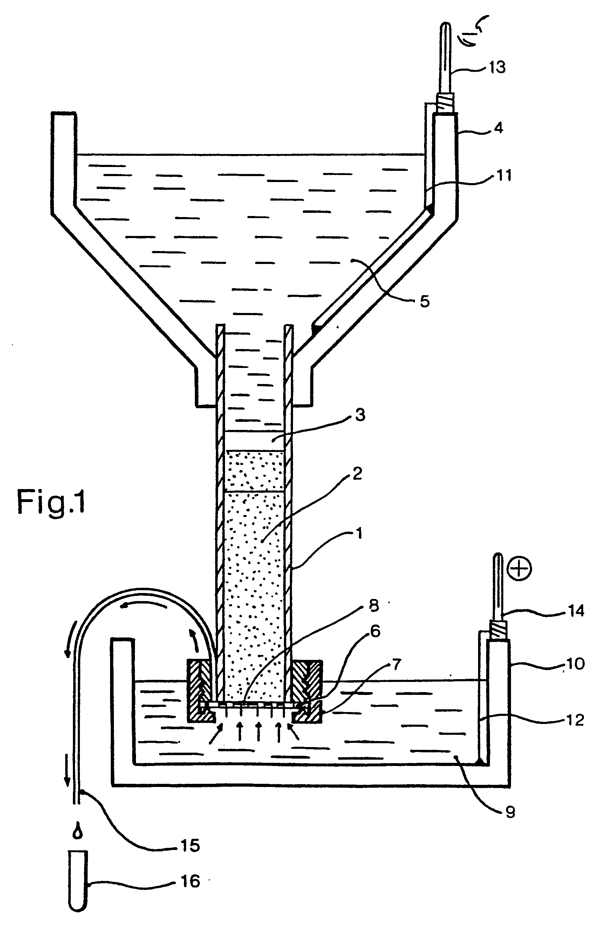

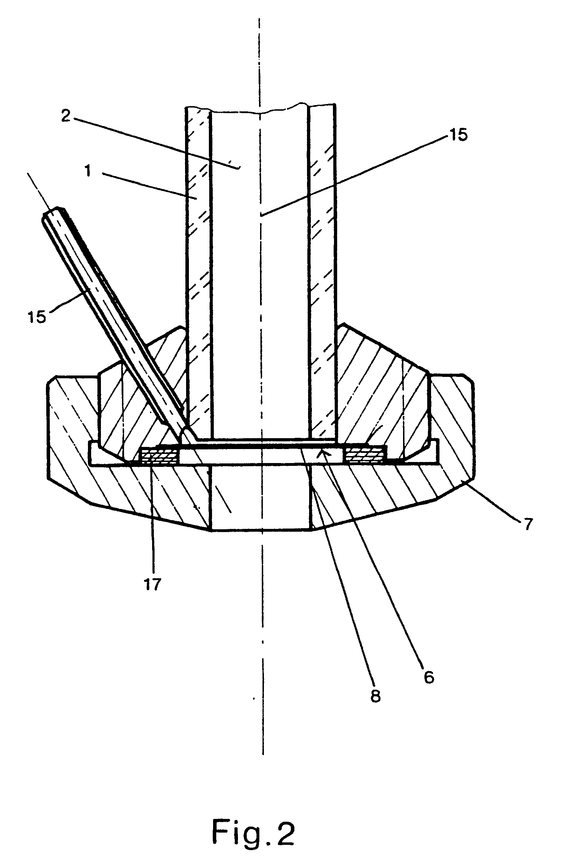

L'invention sera illustrée plus en détail ci-après à l'aide des figures 1 et 2 qui représentent respectivement des modes de réalisation d'appareils d'électrophorèse selon l'invention.

Sur la figure 1, on a représenté un appareil d'électrophorèse comprenant une enceinte formée d'un tube cylindrique 1 en verre renfermant le gel 2 sur lequel est déposé l'échantillon 3 contenant le produit à récupérer.

Ainsi, la partie supérieure du tube 1 est engagée dans la partie inférieure d'un bac 4 de forme entonnoir, et est immergée dans un tampon supérieur d'électrode 5 contenu dans le bac.

L'extrémité inférieure du tube 1 est fermée par une membrane semi-perméable 6, fermement maintenue sur le pourtour du gel par un collier à vis en polyéthylène 7, délimitant une chambre d'élution de très faible volume 8 (représentée avec une épaisseur exagérée sur la figure).

La partie inférieure du tube plonge dans un tampon inférieur d'électrode 9 contenu dans le bac inférieur 10.

Une cathode 11 et une anode 12 sont fixées avec leurs bornes respectives 13 et 14 sur les parois internes respectivement du bac 4 et du bac 10.

Un tube 15 en polyéthylène est maintenu par le collier à vis 7 contre le tube 1 de sorte qu'une extrémité soit appuyée contre la membrane semi-perméable 6, l'autre extrémité débouchant à l'extérieur du bac vers un collecteur de fractions 16.

Le tube en verre 1 est bouché en bas et le gel 2 est polymérisé de la façon habituelle. On dépose en haut du gel un échantillon 3 renfermant les produits à séparer. Ceux-ci migrant vers la chambre d'élution 8, le tampon d'électrode 9 entre dans la chambre d'élution en traversant la membrane semi-perméable 6 et ressort par le tube 15 en emportant vers le collecteur de fraction 16 les produits qui émergent du gel.

Sur la figure 2, on a représenté un autre mode de réalisation d'une chambre d'élution. Les références de la figure 1 sont utilisées pour désigner les mêmes éléments.

La chambre d'élution est formée par l'extrémité du gel 2 et la membrane 6 qui est maintenue de manière étanche et parallèle au gel à l'aide du collier vissant 7 appliquant une bague d'étanchéité en matériau souple 17 tel que le caoutchouc. L'éluat est évacué par le conduit 15.

A titre d'exemple, on rapporte ci-après la réalisation du procédé selon l'invention à l'aide de l'appareil décrit ci-dessus. Cet exemple s'applique à l'étape finale de la purification d'une kinase qui représente moins de 1 : 10 000 d'un mélange comportant plusieurs centaines de protéines.

Les différentes étapes de la purification sont les suivantes:

a) précipitation acide
b) précipitation par le sulfate d'ammonium
c) chromatographie sur DEAE-cellulose
d) chromatographie sur phosphocellulose
e) chromatographie sur hydroxylapatite
f) ultracentrifugation sur gradient de glycérol
g) électrophorèse sur gel de polyacrylamide

On observera que les contaminants de l'échantillon utilisé pour l'étape g possèdent des charges et des masses très voisines de celles de l'enzyme et que, par conséquent, les contaminants et l'enzyme migrent dans le gel les uns à côté des autres (de l'ordre du mm). Néanmoins, certaines fractions de l'éluat contiennent uniquement l'enzyme recherché.

On utilise un gel de polyacrylamide de 2 cm² de section. Les tampons d'électrode sont formés de tris-glycine pH 8,3 ou de tris/Bicine (dérivé de glycine) pH 9,3.

Leur conductivité σ est de 7 mmhos. Le tampon de gel est formé de tris/HCl, pH 9,8 de conductivité σ égale à 0,7 mmhos.

Comme élément semi-perméable, on utilise une membrane millipores pour dialyse, de diamètre moyen de pores de l'ordre de 250 Å.

Le volume d'élution pour chaque protéine est de 0,05 ml à 0,5 ml environ dépendant des conditions d'électrophorèse et de la quantité et des propriétés de migration de chaque protéine. (On notera que les volumes d'élution correspondants des appareils existant actuellement sur le marché est de 1 à plusieurs ml).

On récupère l'enzyme avec un rendement de 50 à 60 %, en activité enzymatique.

On notera que la kinase présente la particularité d'être retenue partiellement dans le gel ce qui diminue le rendement. En marquant l'enzyme à l'aide d'un traceur radio-actif, on vérifie que seuls quelques pour cent de radioactivité sont absorbés sur la membrane et que la perte majeure se produit dans le gel.

Pour d'autres protéines, le rendement est au moins égal à ceux obtenus avec les appareils actuellement disponibles et dépasse par exemple 90 % avec l'hémoglobine.

L'invention fournit donc des moyens simples et efficaces pour purifier par électrophorèse préparative des compositions chimiques ou biologiques grâce à l'application du phénomène d'électroendosmose à l'élution des produits. Leur utilisation pour purifier des protéines et des acides nucléiques revêt un intérêt particulièrement important.

Il est rappeté que: 1Å = 0,1 nm.

## Revendications

1 Procédé de purification de produits d'un échantillon donné par électrophorèse sur gel avec élution de ces produits à l'aide d'un premier système tampon et comprenant:

- le passage d'un deuxième tampon, dans le sens opposé à celui de la migration des produits à séparer, vers une chambre d'élution définie entre la surface du gel correspondant à la zone de fin de migration des produits et un élément semi-perméable, maintenu de manière étanche parallèlement à la dite surface du gel, l'élément semi-perméable ne se laissant pas traverser par les molécules éluées mais les déviant vers une ou des sorties,

- l'évacuation de la chambre d'élution, par le deuxième tampon, des produits ayant subi l'électrophorèse, et

- la récupération de ces produits, caractérisé en ce que:

. le passage du deuxième tampon est engendré par la migration du tampon sous l'effet du courant d'électrophorèse ou électroendosmose, sans qu'aucune pompe ne soit actionnée, et

. le volume de la chambre d'élution est virtuel, c'est-à-dire la distance de l'élément semi-perméable de la surface du gel est pratiquement nulle.

2. Procédé selon la revendication 1, caractérisé en ce que l'échantillon à purifier est déposé au sommet d'une colonne de gel dont la partie supérieure est immergée dans un tampon contenu dans un récipient pourvu d'une électrode, ou tampon d'électrode supérieur, et dont la partie inférieure avec la chambre d'élution virtuelle compris dans un élément électroendosmotique est en contact avec un tampon contenu dans un récipient pourvu d'une autre électrode, ou tampon d'électrode inférieur.

3. Procédé selon l'une quelconque des revendications 1 ou 2, caractérisé en ce que le gel présente une forme cylindrique, en tambour ou en plaques.

4. Appareil pour la mise en oeuvre d'un procédé d'électrophorèse préparative selon la revendication 1, caractérisé en ce qu'il comprend:

- un élément semi-perméable de forme adaptée au gel permettant de mettre à profit le phénomène d'électroendosmose qui se crée pendant l'électrophorèse, sans qu'aucune pompe ne soit actionnée,

- des moyens de sortie permettant d'évacuer sans l'aide de pompe vers l'extérieur les produits qui émergent du gel à l'aide du courant de tampon dans le sens opposé à celui de la migration des produits engendré par l'élément électroendosmotique.

5. Appareil selon la revendication 4, caractérisé en ce que le ou les conduits de sortie sont disposés sur le côté du gel ou au milieu de la surface du gel de manière à évacuer simultanément et en un minimum de temps toutes les molécules d'un type donné qui émergent du gel.

6. Appareil selon la revendication 4 ou 5, caractérisé en ce qu'il comprend, en outre, un circuit de réfrigération.

7. Appareil pour la mise en oeuvre d'un procédé d'électrophorèse préparative avec élution des produits à purifier d'un échantillon donné à l'aide d'un premier système tampon et comprenant:

- le passage d'un deuxième tampon, sans qu'aucune pompe ne soit actionnée dans le sens opposé à celui de la migration des produits à séparer, vers une chambre d'élution définie entre la surface du gel correspondant à la zone de fin de migration des produits et un élément semi-perméable, maintenu de manière étanche parallèlement à la dite surface du gel, l'élément semi-perméable ne se laissant pas traverser par les molécules éluées mais les déviant vers une ou des sorties,

- l'évacuation de la chambre d'élution, par le deuxième tampon, des produits ayant subi l'électrophorèse, et
- la récupération de ces produits, caractérisé en ce qu'il comprend:
- une enceinte formée d'un tube cylindrique 1 renfermant un gel 2 sur lequel est déposé un échantillon 3 contenant le produit à récupérer,
- la partie supérieure du tube 1 étant immergée dans un tampon supérieur d'électrode 5 contenu dans le bac 4,
- un élément électroendosmotique maintenu à l'extrémité du tube 1 contre le gel par un collier à vis 7 formant une chambre d'élution de volume virtuel
- un bac inférieur 10 contenant un tampon inférieur d'électrode 9, dans lequel plonge la partie inférieure du tube 1,
- des électrodes 11 et 12 fixées sur les parois internes du bac 4 et du bac 10,
- un tube 15 dont une extrémité est en communication avec la chambre d'élution virtuelle de l'élément électroendosmotique et l'autre extrémité débouchant à l'extérieur du bac vers un collecteur de fraction 16.

8. Application d'un appareil selon l'une quelconque des revendications 4 à 7, et du procédé selon l'une quelconque des revendications 1 à 3 à la purification de composition chimique ou biologique, en particulier, de protéines, notamment, des enzymes et d'acides nucléiques.

**Patentansprüche**

1. Verfahren zur Reinigung von Substanzen einer durch Elektrophorese auf Gel entstandenen Probe, bei dem diese Substanzen mit Hilfe eines ersten Puffersystems eluiert werden, und das
- die Durchleitung eines zweiten Puffers in der Wanderung der zu trennenden Substanzen entgegengesetzten Sinn in Richtung einer Elutionskammer, die zwischen der dem Endbereich der Wanderung der Substanzen entsprechenden Oberfläche des Gels und einem semipermeablen Element ausgebildet ist, das parallel zur Oberfläche des Gels abdichtend gehalten ist, wobei das semipermeable Element sich nicht von den eluierten Molekülen durchdringen läßt, sondern sie in Richtung eines Auslasses oder von Auslässen umleitet,
- die Entleerung der Elutionskammer durch den zweiten Puffer, wobei die Substanzen der Elektrophorese unterworfen werden, und
- die Rückgewinnung dieser Substanzen umfaßt, dadurch gekennzeichnet, daß die Durchleitung des zweiten Puffers durch die Wanderung des Puffers aufgrund eines Elektrophoresestroms oder aufgrund von Elektroendosmose verursacht wird, ohne daß eine Pumpe in Gang gesetzt wird, und das Volumen der Elutionskammer virtuell ist, d.h. der Abstand des semipermeablen Elements von der Oberfläche des Gels praktisch null ist.

2. Verfahren nach Anspruch 1, dadurch gekennzeichnet, daß die zu reinigende Probe oben auf eine Gelkolonne abgelegt wird, deren oberer Abschnitt in einen Puffer getaucht ist, der in einem mit einer Elektrode oder einem oberen Elektrodenpuffer versehenen Behälter enthalten ist, und deren unterer, mit der virtuellen Elutionskammer in einem elektroendosmotischen Element befindlicher Abschnitt mit einem Puffer in Berührung steht, der in einem mit einer anderen Elektrode oder einem unteren Elektrodenpuffer versehenen Behälter enthalten ist.

3. Verfahren nach einem der Ansprüche 1 oder 2, dadurch gekennzeichnet, daß das Gel ein Trommel oder Platten oder eine zylindrische Form aufweist.

4. Vorrichtung zur Durchführung eines Verfahrens einer präparativen Elektrophorese nach Anspruch 1, gekennzeichnet durch:
- ein in der Form an das Gel angepaßtes semipermeables Element, das eine Ausnutzung des Phänomens der Elektroendosmose ermöglicht, die sich während der Elektrophorese bildet, ohne daß eine Pumpe in Gang gesetzt wird,
- Auslaßeinrichtungen, die es ermöglichen, die Substanzen ohne Hilfe einer Pumpe nach außen abzuführen, die mit Hilfe des Pufferstroms in dem der durch das elektroendosmotische Element verursachten Wanderung der Substanzen entgegengesetzten Sinn aus dem Gel austreten.

5. Vorrichtung nach Anspruch 4, dadurch gekennzeichnet, daß die Auslaßleitung oder die Auslaßleitungen so auf der Seite des Gels oder in der Mitte der Oberfläche des Gels angeordnet sind, daß alle Moleküle einer entstandenen Art, die aus dem Gel austreten, gleichzeitig und in minimaler Zeit abgeführt werden.

6. Vorrichtung nach Anspruch 4 oder 5, dadurch gekennzeichnet, daß sie außerdem einen Kühlkreis aufweist.

7. Vorrichtung zur Durchführung eines Verfahrens einer präparativen Elektrophorese, bei dem die zu reinigenden Substanzen einer mit Hilfe eines ersten Puffersystems entstandenen Probe eluiert werden, und das
- ohne eine Pumpe in Gang zu setzen die Durchleitung eines zweiten Puffers im zur Wanderung der zu trennenden Substanzen entgegengesetzten Sinn in Richtung einer Elutionskammer, die zwischen der dem Endbereich der Wanderung der Substanzen entsprechenden Oberfläche des Gels und einem semipermeablen Element ausgebildet ist; das parallel zur Oberfläche des Gels abdichtend gehalten ist, wobei das semipermeable Element sich nicht von den eluierten Molekülen durchdringen läßt, sondern sie in Richtung eines Auslasses oder von Auslässen umleitet,
- die Entleerung der Elutionskammer durch den zweiten Puffer, wobei die Substanzen der Elektrophorese unterworfen werden, und
- die Rückgewinnung dieser Substanzen umfaßt,
gekennzeichnet durch
- einen als zylindrisches Rohr (1) ausgebildeten Behälter, der ein Gel (2) enthält, auf dem eine Probe (3) abgelegt ist, die die rückzugewinnende Substanz enthält,
- wobei der obere Abschnitt des Rohres (1) in einen oberen Elektrodenpuffer (5) eingetaucht ist, der in dem unteren Teil (4) enthalten ist,
- ein am Ende des Rohres (1) durch einen eine Elutionskammer mit virtuellem Volumen bildenden schraubbaren Ring (7) gegen das Gel gehaltenes elektroendosmotisches Element,
- einen unteren Behälter (10), der einen unteren Elektrodenpuffer (9) enthält und in den der untere Abschnitt des Rohres (1) eintaucht,
- auf den Innenwänden des Behälters (4) und des Behälters (10) befestigte Elektroden (11 und 12),
- ein Rohr (15), dessen eines Ende mit der virtuellen Elutionskammer des elektroendosmotischen Elemente in Verbindung steht und dessen anderes Ende aus dem Behälter zu einem Fraktionssammler (16) hin austritt.

8. Verwendung einer Vorrichtung nach einem der Ansprüche 4 bis 7 und des Verfahrens nach einem der Ansprüche 1 bis 3 zur Reinigung einer chemischen oder biologischen Zusammensetzung, speziell von Proteinen, insbesondere von Enzymen und Nukleinsäuren.

## Claims

1. Procedure for purification of the substances of a given sample by gel electrophoresis with the elution of these substances by means of a first buffer system, and comprizing:
- the passage of a second buffer in the sense opposite to the direction of migration of the products to be separated towards an elution chamber defined between the surface of the gel corresponding to the zone of the migration terminus of the products and a semi-permeable element, fitted tightly and parallel to said gel surface, said semi-permeable element not allowing the passage of the eluted molecules but rather deflecting them towards one or more outlets,
- the removal of the products having undergone electrophoresis from the elution chamber by means of the second buffer, and
- the recovery of these products,
  wherein
. the passage of the second buffer is generated by the migration of the buffer caused by the electrophoresis or electroendosmosis flow, no action pump being necessary, and
. the volume of the elution chamber is virtual, i.e. the distance from the semi-permeable element to the surface of the gel is practically zero.

2. Procedure according to claim 1, characterized in that the sample to be purified is placed on top of a column of gel, the upper part of which is immersed in a buffer contained in a reservoir equipped with an electrode, i.e. the upper electrode buffer, and the lower part of which, together with the virtual elution chamber bounded by a semi-permeable element, is in contact with a buffer contained in a vessel equipped with another electrode, i.e. the lower electrode buffer, which flows through the semi-permeable element in the direction opposite to that in which the products migrate.

3. Procedure according to anyone of the claim 1 or 2, characterized in that the gel is in the form of a cylinder, drum or slab.

4. Apparatus to carry out a procedure for preparative electrophoresis according to claim 1, characterized in that it includes:
- a semi-permeable element having a shape adapted to the gel enabling advantage to be taken of the phenomenon of electro-endosmosis which is generated during electrophoresis, without actionating any pump,
- outlets for the removal of the products which emerge from the gel, without using any pump, by means of the buffer flowing in the direction opposite to that of the migration of the products generated by the electroendosmotic element.

5. Apparatus according to claim 4, characterized in that the outlet tube(s) is (are) arranged on the edge of the gel or in the middle of the gel surface in such a way that all of the molecules of a given type of product which emerge from the gel are removed simultaneously and as quickly as possible.

6. Apparatus according to claim 4 or 5, characterized in that it includes, in addition, a cooling circuit.

7. Apparatus in which a procedure for preparative electrophoresis can be carried out with elution of the products to purify of a given sample by means of a first buffer system and comprising:
- the passage of a second buffer without actioning any pump, in the direction opposite to the migration of the products to separate, towards an elution chamber defined between the surface of the gel corresponding to the zone of migration terminus of the products and a semi-permeable element, maintained tightly and parallel to said gel surface, the semi-permeable element not allowing the passage of the eluted molecules but rather deflecting them towards one or more outlets,
- the removal of the products having undergone electrophoresis from the elution chamber by means of the second buffer, and
- the recovery of these products, characterized in that it includes:
- an enclosed space in the form of a cylindrical glass tube 1 containing the gel 2 on which is placed the sample 3 containing the product to be recovered,
- the upper part of tube 1 being immersed in an upper electrode buffer 5 contained in the reservoir 4,
- an electroendosmotic element maintained at the end of tube 1 against the gel by a screw collar fitting 7, forming an elution chamber having a virtual volume,
- a lower reservoir 10 containing a lower electrode buffer 9, in which the lower part of the tube 1 is immersed,

- electrodes 11 and 12 attached to the internal walls of the reservoirs and 10 respectively,

- a tube 15 having one end communicating with the virtual elution chamber of the electroendosmotic element and the other end extends outside of the reservoir to a fraction collector 16.

8. Use of an apparatus according to anyone of the claims to 7, and of the procedure according to anyone of the claims 1 to 3 for the purification of a chemical or biological composition, in particular, of proteins, especially enzymes and nucleic acids.

Fig.1

Fig.2